# EUROPÄISCHE PATENTSCHRIFT

(11) **EP 2 307 246 B1**
(45) Veröffentlichungstag und Bekanntmachung des Hinweises auf die Patenterteilung: **12.03.2014**
(21) Anmeldenummer: 09781001.4
(22) Anmeldetag: 23.07.2009
(51) Int. Cl.: B60S 3/00, B60S 3/04

(54) **FAHRZEUGWASCHANLAGE**
CAR WASHING SYSTEM
STATION DE LAVAGE DE VÉHICULES

(30) Priorität: 24.07.2008 DE 202008009959 U
(43) Veröffentlichungstag der Anmeldung: 13.04.2011
(73) Patentinhaber: WashTec Holding GmbH, 86153 Augsburg (DE)
(72) Erfinder: WIMMER, Georg, 86444 Affing (DE)
(74) Vertreter: Charrier, Rapp & Liebau
(86) Internationale Anmeldenummer: PCT/EP2009/059520
(87) Internationale Veröffentlichungsnummer: WO 2010/010161

(56) Entgegenhaltungen:
- DE-U1- 29 903 300
- FR-A- 852 538
- US-A- 1 827 886
- US-A- 3 593 726
- US-A- 3 744 433
- US-A- 3 844 222
- US-A- 5 033 490
- US-A- 5 226 436
- US-B1- 7 243 605

## Beschreibung

Die Erfindung betrifft eine Fahrzeugwaschanlage nach dem Oberbegriff des Anspruchs 1.

Eine Radleitschiene einer Eingangs genannten Fahrzeugwaschanlage geht aus der DE 21 04 049 A hervor. Die dortige Schleppvorrichtung für Fahrzeuge, insbesondere bei Waschanlagen, weist zwei Leitschienen auf, zwischen denen die Räder einer Fahrzeugseite hindurchbewegt werden. Die Leitschienen weisen einen im wesentlichen senkrecht auf dem Fahrzeugwaschanlagenboden angeordneten flachen Steg auf, an dessen oberen Ende ein im Querschnitt kreisrunder Längsstab angeordnet ist.

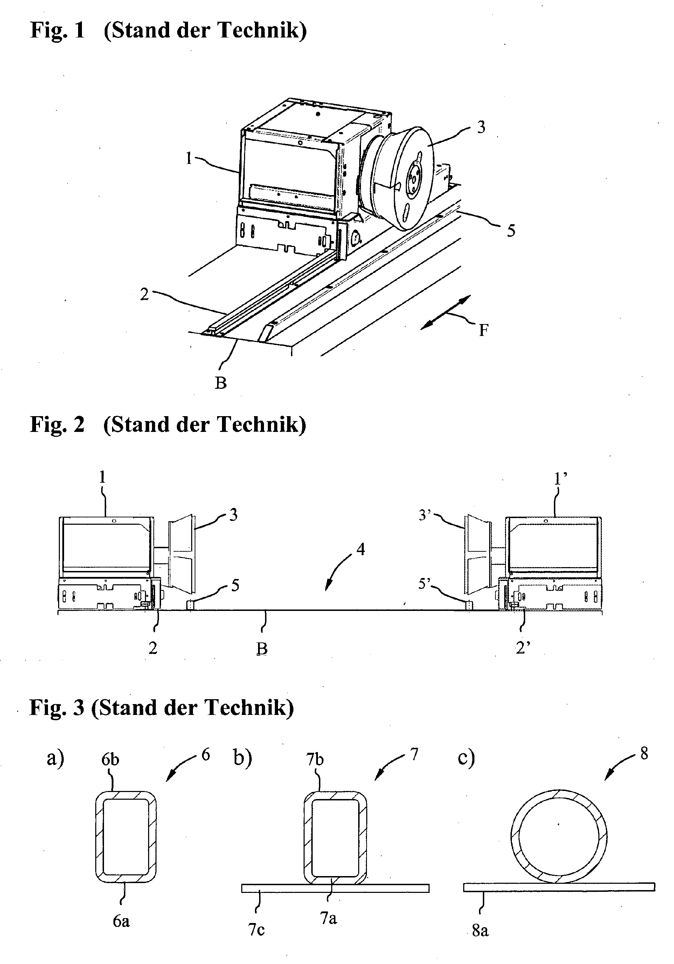

Weitere Radleitschienen für Fahrzeugwaschanlagen zeigen die Figuren 1 bis 5. In Fig. 1 ist ein linker Standfuß 1 einer nicht gezeigten Portalsäule eines verfahrbaren Waschportals einer Fahrzeugwaschanlage dargestellt, der in eine Fahrrichtung F an einer Fahrschiene 2 entlang auf einem Waschanlagenboden B verfahrbar ist. Am Standfuß 1 ist ein schematisch dargestellter Felgenwäscher 3 angeordnet, welcher in Richtung einer Felge eines zu waschenden Fahrzeugs weist. Um das zu waschende Fahrzeug möglichst mittig bezüglich der in Fig. 2 durch die Standfüße angedeuteten Portalsäulen 1, 1' in einen Fahrbereich 4 der Fahrzeugwaschanlage einfahren zu können, sind neben den Fahrschienen 2, 2' zum Fahrbereich 4 hin versetzt Radleitschienen 5, 5' am Boden der Fahrzeugwaschanlage befestigt. Wie insbesondere aus Fig. 2 hervorgeht, begrenzen die beiden Radleitschienen 5 und 5' den Fahrbereich 4, zwischen dem sich die Räder eines zu waschenden Fahrzeuges bewegen sollen.

Beispiele für Querschnitte von bekannten Radleitschienen zeigt die Fig. 3. Eine in Fig. 3 a) dargestellte Radleitschiene 6 besteht aus einem rechteckförmigen Stahlhohlprofil, wobei die Kanten leicht abgerundeten sind. In einem Boden 6a und einer Stirnseite 6b der Radleitschiene 6 sind Durchgangsbohrungen in bestimmten Abständen eingebracht, durch welche die Radleitschiene 6 am Waschanlagenboden B verschraubt werden kann. Eine weitere bekannte Radleitschiene 7 zeigt Fig. 3 b). Dort wurde die Radleitschiene aus Fig. 3a auf ein Bodenblech bzw. Bodenschwelle 7c geschweißt, so dass keine Durchgangsbohrungen in einer Stirnseite 7b und einem Boden 7a der Radleitschiene 7 notwendig sind. Die Radleitschiene 7 wird dann durch Verschrauben des Bodenblechs bzw. der Bodenschwellen 7c am Waschanlagenboden B befestigt. Auch eine in Fig. 3 c) gezeigte bekannte Radleitschiene 8 weist ein Bodenblech bzw. Bodenschwellen 8a zum Befestigen am Waschanlagenboden B auf, während das Führungsteil der Radleitschiene 8 aus einem im Querschnitt kreisringförmigen Stahlrohr gefertigt ist.

Die bekannten Radleitschienen 5, 5' dienen dazu, beim Einfahren des Fahrzeugs sicherzustellen, dass der Fahrer dies möglichst mittig im Bezug auf die seitlichen Behandlungseinrichtungen positioniert, um bei seitlich am Fahrzeug angreifenden Behandlungseinrichtungen den möglichst gleichen Verfahrweg zu haben. So können beispielsweise die in Fig. 2 angedeuteten Radwäscher 3 und 3' von der zeichnerisch dargestellten fahrzeugfernen Stellung in die in Fig. 2 nicht gezeigten ausgefahrenen Stellung zum Waschen der Felgen ausgefahren werden. Um hierbei ein gutes Waschergebnis zu erzielen, ist es wünschenswert, beide mit etwa dem gleichen Anpressdruck an die Felgen anzupressen, was vor allem dann gut gelingt, wenn das Fahrzeug exakt mittig gegenüber dem Portalsäulen 1, 1' positioniert ist. Eine nicht mittige Position des Fahrzeugs könnte dazu führen, dass Fahrwege bzw. Reichweiten von Behandlungsaggregaten nicht ausreichen und es deshalb zu ungenügender Reinigung des Fahrzeugs kommt. Zudem sollen die Radleitschienen 5 und 5' sicherstellen, dass das Fahrzeug bei einer Überfahrt des verfahrbaren Waschportals nicht in einem Bereich steht, an dem eine Kollision mit den Behandlungsaggregaten oder sonstigen Teilen des Waschportals zu befürchten ist, beispielsweise Beschädigungen der Außenspiegel.

Um diese Führungsfunktion zu gewährleisten, müssen die Radleitschienen 5, 5' so hoch sein, dass der Fahrer des einfahrenden Fahrzeugs ein evtl. Anfahren oder auch Überfahren einer Radleitschiene 5, 5' bemerkt, um dann Gegenlenken zu können. Dies stellt bei kleinen, leichten Fahrzeugen mit kleinen Rädern kein Problem dar, da dort ein Kontakt mit den üblicherweise 60 mm hohen, im Querschnitt rechteckigen Radleitschienen 5, 5' ohne weiteres bemerkt wird. Es gibt jedoch zunehmend große, schwere Fahrzeuge mit großer Fahrzeugbereite und großem Rad- bzw. Felgendurchmesser, beispielsweise 21"-Felgen bei Sportwagen, Geländefahrzeugen oder sogenannten SUV-Fahrzeugen. Bei diesen Fahrzeugen wird ein Anfahren oder Überfahren der Radleitschienen 5, 5' aufgrund der Reifengröße und des hohen Fahrzeuggewichts vom Fahrer oft nicht bemerkt, so dass die Fahrzeuge oft außermittig im Fahrbereich 4 oder sogar auf den Radleitschienen 5, 5' zu stehen kommen. Hierdurch kommt es dann beim Überfahren mit dem Waschportal oft zu Beschädigungen herausstehender Fahrzeugteile, beispielsweise des Außenspiegels, auf der betreffenden Fahrzeugseite. Zudem wird das Reinigungsergebnis verschlechtert, da das Fahrzeug auf seiner anderen Fahrzeugseite zu weit von den Behandlungsaggregaten entfernt steht. Hinzu kommt, dass derartig große Fahrzeuge oft eine so große Spurbreite und somit Radaußenabstände haben, dass bei alten oder schmalen Fahrzeugwaschanlagen die Radleitschienen zu nah beieinander stehen und immer an- bzw. überfahren werden.

Bei kleinen, schmalen Waschanlagen ergibt sich bei breiten Fahrzeugen mit großen Spurweiten und entsprechenden Abstände der Radaußenseiten das Problem, dass diese Fahrzeuge die Radleitschienen ein- oder beidseitig überfahren müssen, um überhaupt in die Waschanlagen einfahren zu können. Um derartige Fahrzeugwaschanlagen auch an die größeren Fahrzeugsbreiten anpassen zu können, müssten die Radleitschienen nach außen versetzt werden. Dies wirft jedoch bei den bekannten Radleitschienen das Problem auf, dass dann der Abstand beispielsweise zwischen dem in Fig. 2 gezeigten verfahrbaren Waschportal 1 und den Radleitschiene 5, 5' zu gering wird. Dieser Abstand ist in einigen Ländern gesetzlich vorgeschrieben und beträgt beispielsweise in Deutschland mindest 120 mm oder weniger als 10 mm. Diese Vorgabe soll verhindern, dass eine Person bei Wartungsarbeiten oder in einem Störfall in der Waschanlage mit dem Schuh zwischen den Fuß der Maschine 1 und der Radleitschiene 5 hängen bleibt, so dass im ungünstigsten Fall bei einem unerwünschten Anfahren des Waschportals der Fuß zwischen Radleitschiene und Fahrschiene gequetscht und vom Waschportal überfahren wird. Beträgt der Abstand nur weniger als 10 mm oder mehr als 120 mm, ist die Gefahr des Steckenbleibens oder Einklemmens nicht zu befürchten. Soll die Fahrzeugwaschanlage aber auch für obige breite Fahrzeuge verwendet werden können, müssen die Radleitschienen einerseits nach außen versetzt werden, andererseits muss die oben aufgezeigte Gefährdung von Personen verhindert werden.

Die DE 38 43 643 C2 offenbart eine Schleppvorrichtung für Fahrzeugräder in Autowaschanlagen, bei der ein Fahrzeugrad mittels eines endlos umlaufenden Zugmittels durch die Autowaschanlage gezogen wird. Das Zugmittel besitzt beidseits einer Laufbahn für das zu schleppende Fahrzeugrad angeordnete umlaufende Ketten, an denen in Abständen beweglich gelagerte Gleitsteine angeordnet sind. Um zu verhindern, dass das geschleppte Rad aus der Fahrspur ausweicht, sind die Gleitsteine neben der Führungsbahn vom Fahrzeugrad nach oben weg geneigt, bilden also einen Führungstrichter. Ein aus der Spur geratendes Fahrzeugrad läuft an den Gleitsteinen an und gleitet dann wieder zur Führungsbahn zurück.

Diese Ausgestaltung weist einen für eine feststehenden Führungsschiene unnötig komplizierten Aufbau auf und dient ausschließlich der Führung des Fahrzeugrads. Als Schutz für im maschinenseitigen, also dem Fahrbereich abgewandten und außerhalb der Radleitschienen befindlichen Bereich herumlaufende Bedienpersonal ist diese Ausgestaltung weder vorgesehen noch geeignet.

Um auch bei derartig großen Fahrzeugen die Berührung der Radleitschienen 5, 5' erkennen zu können, könnte in einem ersten Ansatz die Höhe der Radleitschiene vergrößert werden. Dies bringt jedoch den Nachteil mit sich, dass bei Fahrzeugen mit kleinen Reifen oder Niederquerschnittsreifen nicht nur der Gummireifen, sondern auch die Felge selbst an den üblicherweise aus Stahl bestehenden Radleitschienen 5, 5' anschlagen und hierbei beschädigt werden. Besonders bei oben genannten großen Fahrzeugen werden aufgrund des großen Felgendurchmesser oftmals Niederquerschnittsreifen verwendet, so dass in Verbindung mit der großen Fahrzeugbreite derartige Fahrzeuge bereits jetzt überproportional oft mit ihren in der Regel teueren Felgen an die Radleitschienen anschlagen. Die Beschädigung derart teurer Felgen ist für den Betreiber der Fahrzeugwaschanlage aufgrund der hohen Schadensersatzleistungen von großem Nachteil. Durch höhere Radleitschienen würden diese Fälle noch vermehrt.

Um diesen Nachteil, vor allem bei Niederquerschnittsreifen, zu vermeiden, wäre ein zweiter Lösungsansatz, die Radleitschienen niedriger auszuführen. Dies führt aber dazu, dass ein Anfahren oder Überfahren der Radleitschienen gerade von diesen großen Fahrzeugen nicht mehr bemerkt wird, so dass kein gutes Reinigungsergebnis erzielt wird und zudem Beschädigungen anderer Fahrzeugteile oder Behandlungsaggregate der Waschanlage zu befürchten sind.

Eine eingangs genannte Fahrzeugwaschanlage offenbart die US 5 226 436. Diese Fahrzeugwaschanlage weist seitlich zum Fahrbereich montierte Radleitschienen auf, welche aus einem aufgeständerten Rohr gefertigt sind und beim Vorbeifahren eines Waschportals die Gefahr hervorrufen, dass ein zwischen einer der Radleitschienen und einer benachbarten Fahrschiene des Waschportals befindlicher Fuß eingeklemmt wird. Da die Radleitschienen sich am Eingang der Waschanlage nach außen zu den Fahrschienen des Waschportals hin aufweiten, besteht insbesondere in diesem Bereich eine erhöhte Einklemmgefahr.

Die US 5 033 490 offenbart eine Fahrzeugwaschanlage mit über dem Fahrzeug in einem Rahmen verfahrbaren, frei über dem Boden hängenden Behandlungseinrichtungen. Eine einzige Radleitschiene mit trogförmiger Vertiefung führt die Fahrzeugreifen einer Seite des Fahrzeugs. Da dort kein auf bodenmontierten Fahrschienen verfahrbares Waschportal vorgesehen ist, besteht hier keine Notwendigkeit, das Einklemmen des Fußes einer Person zwischen Fahrschienen des Waschportals und Radleitschienen zu vermeiden. Auch wäre dort eine zweite Radleitschiene nicht sinnvoll, da dann nur Fahrzeuge mit einem Radabstand entsprechend dem Abstand der Radleitschienen gewaschen werden könnten. Die trogförmige Fahrrinne der dortigen Radleitschienen würden keine großen Abweichungen zulassen. Die zwei Radleitschienen würden nur einen geringen Spielraum in seitlicher Richtung für Fahrzeuge mit unterschiedlichen Radabständen und insbesondere unterschiedlichen Reifengrößen ermöglichen.

Die US 3 593 726 offenbart eine Sprühvorrichtung für die Reifenbenetzung mit einer Vielzahl von hintereinander angeordneten komprimierbaren Schlauchschleifen, wobei die Sprühvorrichtung vor einer nachfolgenden Reinigungsstation angeordnet ist. Fährt ein Fahrzeug über die Schlauchschleifen, so wird über in seitlichen Radleitschienen angeordnete Sprühdüsen Flüssigkeit auf die Fahrzeugreifen gesprüht. Um den gesamten Reifen gleichmäßig zu besprühen, muss dass Fahrzeug über sämtliche Schlauchschleifen fahren. Eine Anordnung der Sprühvorrichtung in der nachfolgenden Reinigungsstation wäre deshalb nicht sinnvoll, da dann die Hinterreifen des Fahrzeugs nicht über alle Schlauchschleifen fahren und somit nicht gleichmäßig und vollständig eingesprüht werden könnten.

Es ist deshalb Aufgabe der vorliegenden Erfindung, die oben genannten Nachteile zu überwinden und eine Fahrzeugwaschanlage bereit zu stellen, die ein sicheres, ungefährdetes und beschädigungsfreies Behandeln und Reinigen von Fahrzeugen ermöglicht. Insbesondere soll die Erfindung einerseits eine Beschädigung von Fahrzeugteilen des zu waschenden Fahrzeugs, insbesondere von Reifen oder Reifenfelgen, zuverlässig verhindern und andererseits ein mittiges Einfahren und Positionieren des Fahrzeugs in die Fahrzeugwaschanlage ermöglichen. Gleichermaßen soll die Gefährdung von Personen sicher ausgeschlossen werden.

Diese Aufgabe erlöst die Erfindung durch eine Fahrzeugwaschanlage mit den Merkmalen des Anspruchs 1. Vorteilhafte Ausgestaltungen und zweckmäßige Weiterbildungen der Erfindung sind in den Unteransprüchen angegeben.

Die erfindungsgemäße Fahrzeugwaschanlage ist dadurch gekennzeichnet, dass die Radleitschienen jeweils eine im eingebauten Zustand vom Waschanlagenboden nach oben weisende und entlang der Fahrrichtung des zu behandelnden Fahrzeugs verlaufende, vom Fahrbereich weg weisende Maschinenflanke aufweisen, wobei die Maschinenflanke so ausgebildet ist, dass sie im eingebauten Zustand der Radleitschiene nach oben zum Fahrbereich hin geneigt ist. Bevorzugt kann die die Maschinenflanke auf einer dem Fahrbereich abgewandten Seite der Radleitschiene angeordnet sein. Befindet sich im Bereich zwischen Radleitschiene und Waschportal bzw. dessen Fahrschienen während des Verfahrens des Waschportals ein Schuh einer Person, wird dieser aufgrund der Neigung der Maschinenflanke allenfalls entlang der Radleitschiene verschoben, nicht aber verklemmt. Im günstigsten Fall schiebt das verfahrende Waschportal den Schuh samt Bein der Person an der Maschinenflanke nach oben.

Weiter liegt ein zum Fahrbereich hin geneigter, zwischen der Maschinenflanke und dem Waschanlagenboden gebildeter weiterer Neigungswinkel zwischen 25° und 65°. Bei steileren Neigungswinkeln besteht wieder Einklemmgefahr, während bei flacheren Neigungswinkeln die Radleitschiene zu breit wird um die notwendige Höhe der Radleitschiene zu erhalten.

Bei einer vorteilhaften Ausbildung der Radleitschiene ist eine Radleitflanke auf einer der Maschinenflanke entgegengesetzten Seite der Radleitschiene vorgesehen, wobei die Radleitflanke so ausgebildet ist, dass sie im eingebauten Zustand der Radleitschiene nach oben vom Fahrbereich weg geneigt ist. Hierdurch wird beim Anfahren der Radleitschiene mit dem Reifen zuerst der untere Bereich der Radleitflanke berührt, während der obere, weg geneigte Bereich der Radleitflanke noch ausreichend weit von Reifen und Felge des Fahrzeugs entfernt ist, so dass eine Beschädigung der Felge selbst bei stärkerem Anfahren und geringem Reifenquerschnitt sicher vermieden wird. Ein zwischen der Radleitflanke und einer senkrecht auf dem Waschanlagenboden und parallel zur Fahrrichtung, also parallel zur Radleitschiene verlaufenden Vertikalen gebildeter, vom Fahrbereich weg geneigter Neigungswinkel liegt bevorzugt zwischen 5° und 30°. Bei kleineren Neigungswinkeln kann ein Anschlagen der Felge nicht sicher verhindert werden und bei größeren Neigungswinkeln ist die Radleitflanke zu flach, so dass das Anfahren bzw. Überfahren vom Fahrer nicht mehr zuverlässig bemerkt werden kann.

Fertigungstechnisch vorteilhaft kann die Radleitschiene aus einem länglichen Hohlprofilmaterial gebildet sein, vorzugsweise aus Stahlhohlprofil. Um einen zusätzlichen Schutz für empfindliche Felgen und ggf. vorgesehene Abstandssensoren der Radleitschiene vorzusehen, kann auf der Radleitflanke eine Abdeckung aus Kunststoff oder Gummi, vorzugweise Hartgummi, angeordnet sein.

Eine alternative, fertigungstechnisch vorteilhafte Radleitschiene kann aus einem Vollmaterial aus Kunststoff oder Gummi, vorzugweise Hartgummi, gebildet sein, wodurch Beschädigungen empfindlicher Felgen verhindert werden.

Um das mittige Positionieren zu erleichtern, kann in einer vorteilhaften Ausgestaltung der Radleitschiene mindestens ein Abstandssensor zum Messen des Abstands von Radleitschiene zu einer Radaußenseite und/oder Fahrzeugseite vorgesehen sein. Hierbei ist die geneigte Radleitflanke von Vorteil, da hierdurch ein großes Messfenstern für die Abstandssensoren geschaffen werden kann.

Bei der erfindungsgemäßen Fahrzeugwaschanlage ist der Abstand der Radleitschienen voneinander quer zur Fahrrichtung vorteilhaft größer als ein vorgegebener maximaler Radabstand. Die Radleitflanken der Radleitschienen können vorteilhaft zum Fahrbereich hin weisen, sind also auf der Seite der Fahrzeugräder angeordnet.

Weitere Besonderheiten und Vorzüge der Erfindung ergeben sich aus der folgenden Beschreibung von bevorzugten Ausführungsbeispielen anhand der Zeichnungen. Es zeigen:
- Fig. 1: eine schematische dreidimensionale Darstellung eines Ausschnitts einer bekannten Fahrzeugwaschanlage mit einem verfahrenbaren Waschportal;
- Fig. 2: eine schematische Vorderansicht eines weiteren Ausschnitts der Fahrzeugwaschanlage aus Fig. 1;
- Fig. 3: einen Querschnitt von drei bekannten Radleitschienen;
- Fig. 4: eie schematische dreidimensionale Darstellung eines Ausschnitts einer erfindungsgemäßen Fahrzeugwaschanlage mit einem verfahrenbaren Waschportal;
- Fig. 5: eine schematische Vorderansicht eines weiteren Ausschnitts der Fahrzeugwaschanlage aus Fig. 4;
- Fig. 6: einen Querschnitt einer erfindungsgemäßen Radleitschiene gemäß einem ersten Ausführungsbeispiel;
- Fig. 7: einen Querschnitt durch ein zweites Ausführungsbeispiel einer erfindungsgemäßen Radleitschiene;
- Fig. 8: eine schematische Draufsicht auf einen Teil einer erfindungsgemäßen Fahrzeugwaschanlage nach Fig. 4 und 5.

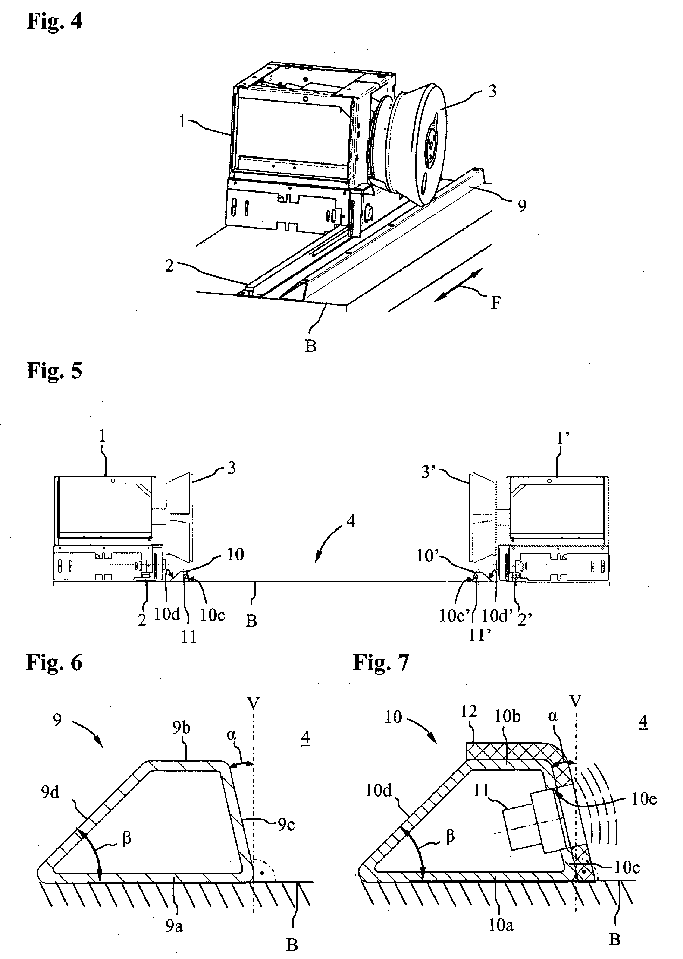

In den Fig. 6 und 7 sind Querschnitte der erfmdungsgemäßen Radleitschienen im eingebauten Zustand gezeigt. Die Radleitschienen weisen eine an die Fahrzeugwaschanlage angepasst Längsausdehnung auf, wie exemplarisch in Fig. 4 angedeutet. Die erfindungsgemäßen Radleitschienen weisen in den Zeichnungen nicht dargestellte Befestigungsmittel auf, beispielsweise Bohrungen in ihren Bodenbereichen, mittels derer sie an den Waschanlagenboden angeschraubt werden können. Eine Fahrrichtung F eines in der Fahrzeugwaschanlage zu waschenden Fahrzeugs verläuft senkrecht zur Zeichnungsebene der Fig. 6 bzw. 7.

Fig. 6 zeigt eine Radleitschiene 9, die aus einem länglichen Stahlhohlprofil, besteht. Sie unterscheidet sich von dieser dadurch, dass eine Maschinenflanke 9d keinen 90°-Winkel mit den im eingebauten Zustand bodenparallelen und koplanaren Boden 9a und oberen Stirnseite 9b einschließt, sondern dass ein weiterer Neigungswinkel β zwischen Boden 9a und Maschinenflanke 9d vorliegend 45° beträgt. Diese Ausführung ermöglicht es, bei schmalen Fahrzeugwaschanlagen die erfindungsgemäßen Radleitschienen in beliebiger Nähe an die Fahrschienen 2, 2' des Waschportals 1, 1' anzubringen, ohne eine Gefahr des Einquetschens oder Steckenbleibens des Schuh einer Person befürchten zu müssen. Hierdurch können schmale Fahrzeugwaschanlagen mit erfmdungsgemäßen Radleitschienen versehen werden, bei denen dies sonst nicht möglich wäre

Eine in Fig. 6 gezeigte erfindungsgemäße Ausführung einer Radleitschiene 9 besteht aus einem länglichen Hohlprofilmaterial aus stabilem Material, hier Stahl. Ein Boden 9a und eine Stirnseite 9b verlaufen koplanar und im wesentlichen parallel zum Waschanlagenboden B. Eine Maschinenflanke 9d schließt einen Neigungswinkel β von 45° mit dem Boden 9a ein, so dass sie zum Fahrbereich 4 hin und somit von der Fahrschiene 2 und der Portalsäule 2 weg geneigt ist. Durch die geneigte Maschinenflanke 9d können auch schmalere Fahrzeugwaschanlagen, bei denen die Fahrbreite des Waschportals nicht vergrößert werden kann oder wo dies wegen des dann notwendig werdenden breiteren Waschportals nicht gewünscht ist, einfach an breitere Fahrzeuge angepasst werden. Die Radleitschiene 9 kann näher zur Fahrschiene 2 angeordnet werden, ohne den üblichen und z.T. vorgeschriebenen Maximal- bzw. Minimalabstand einhalten zu müssen. Auch bei Neubauten von Fahrzeugwaschanlagen, bei denen seitlich kein ausreichender Platz für das Waschportal vorhanden ist, um es breiter zu gestalten, wird dieses Problem durch die erfindungsgemäße Radleitschiene 9 verhindert.

Auch eine Radleitflanke 9c ist vom Boden 9a zur Stirnseite 9b hin geneigt, allerdings vom Fahrbereich 4 weg. Ein weiterer Neigungswinkel α zwischen Radleitflanke 9c und einer senkrecht auf dem Waschanlagenboden B und parallel zur Fahrrichtung F bzw. eingebauten Radleitschiene 9 verlaufenden Vertikalen V beträgt vorliegend 14°. Wird der Neigungswinkel α steiler als 5° zur Vertikalen V gewählt, so besteht nach wie vor die Gefahr, dass die Felge eines Fahrzeugs an der Stirnseite 9b oder der Kante zwischen Stirnseite 9b und Radleitflanke 9d anschlägt und dabei beschädigt wird. Wird die Neigung flacher als 30° zur Vertikalen V gewählt, so bemerkt der Fahrer eines einfahrenden Fahrzeugs das An- bzw. Überfahren an der Radleitschiene 9 nicht mehr, insbesondere bei großen, schweren Fahrzeugen mit großen Reifendurchmessern. Um eine Beschädigung des Reifens beim An- oder Auffahren auf die Radleitschiene 9 zu verringern, ist die Kante zwischen Stirnseite 9b und Radleitflanke 9d abgerundet.

Eine in Fig. 7 gezeigten Ausführung der Erfindung zeigt eine Radleitschiene 10 mit gleichen Querschnitt und Material wie die Radleitschiene 9 aus Fig. 6. Zusätzlich ist auf einer Radleitflanke 10c und auf einer Stirnseite 10b eine Abdeckung 12 aus einem elastischen, stabilen Vollmaterial, hier Hartgummi vorgesehen, um die Felgen beim Anfahren der Radleitflanke vor Beschädigung zu schützen. Weiter weist die Radleitflanke 10c eine Messöffnung 10e auf, welche auch fluchtend durch die Abdeckung 12 reicht. In der Messöffnung 10e ist ein Abstandssensor 11 an der Radleitflanke 10c befestigt und in das Hohlprofil der Radleitschiene 10 versenkt. Der Abstandssensor 11 dient dazu, den Abstand zum Rad bzw. zur Fahrzeugseite eines vorbeifahrenden Fahrzeugs zu messen, wie weiter unten ausführlich beschrieben. Der Abstandssensor 11 ist ein Ultraschallsensor, es können jedoch gleichermaßen andere geeignete Sensortypen, beispielsweise Infrarot- oder Radarsensoren verwendet werden. Der Abstandssensor 16 ist über in Fig. 7 nicht dargestellte Verbindungsleitungen mit einer Steuerung der Fahrzeugwaschanlage verbunden, welche seine Messsignale, also gemessene Messabstände, auswertet. Vorteilhaft sind mehrere solche Abstandssensoren 11 über die Länge der Radleitschiene 10 verteilt angeordnet, bevorzugt in gleichmäßigen Abständen. Durch die geneigte Radleitflanke 11c kann besonders gut ein großes Messfenster für den Abstandssensoren 11 bereitgestellt werden, so dass der Abstandssensor 11 auch in einem sehr steilen Winkel nach oben "sehen" kann, was bei einer senkrechten Radleitflanke nicht möglich wäre.

Bei einer zeichnerisch nicht dargestellten Ausführung der erfindungsgemäßen Radleitschiene wird anstelle des in Fig. 6 und 7 gezeigten Stahl-Hohlkörpers ein Vollmaterial aus Hartgummi verwendet. Dies ist fertigungstechnisch vorteilhaft und kann zudem eine Beschädigung von Felgen durch die Radleitschiene beim Anfahren sicher vermeiden.

Eine Fahrzeugwaschanlage mit einer erfindungsgemäßen Radleitschiene zeigen Fig. 4 und 5. Einziger Unterschied zu der in Fig. 1 und 2 gezeigten Fahrzeugwaschanlage ist, dass im Ausführungsbeispiel nach Fig. 4 und 5 eine Radleitschiene 10 bzw. 10' gemäß Fig. 7 verwendet wird, wobei aus Gründen der Übersichtlichkeit die Abdeckung 12 nicht dargestellt ist. Anstelle der Radleitschiene 10 bzw. 10' kann auch die andere erfindungsgemäße Radleitschienen nach dem Ausführungsbeispiel nach Fig. 6 verwendet werden.

Wie insbesondere aus Fig. 5 zu erkennen, ist der Abstand der Radleitschiene 10 und der Fahrschiene 2 zwar deutlich geringer als der in Fig. 1 und 2 gezeigte Abstand zwischen den herkömmlichen Radleitschiene 5 und Fahrschiene 2. Trotzdem besteht aufgrund der geneigten Maschinenflanke 10d keine Gefahr, dass der Schuh eine Person, beispielsweise einer Bedienperson, eingeklemmt werden kann. Auch bei Waschanlagen, bei denen zuerst das Fahrzeug in die Waschanlage eingefahren und dann ausgestiegen werden muss, um den Reinigungsvorgang zu starten, ist diese Lösung vorteilhaft.

Durch die geneigten Radleitflanken 10c, 10c' kann der Fahrer eines im Fahrbereich 4 fahrenden Fahrzeugs sein Fahrzeug mittig positionieren, ohne beim Anfahren einer der Radleitflanken 10c, 10c' ein Beschädigung der Fahrzeugreifen und/oder -felgen befürchten zu müssen.

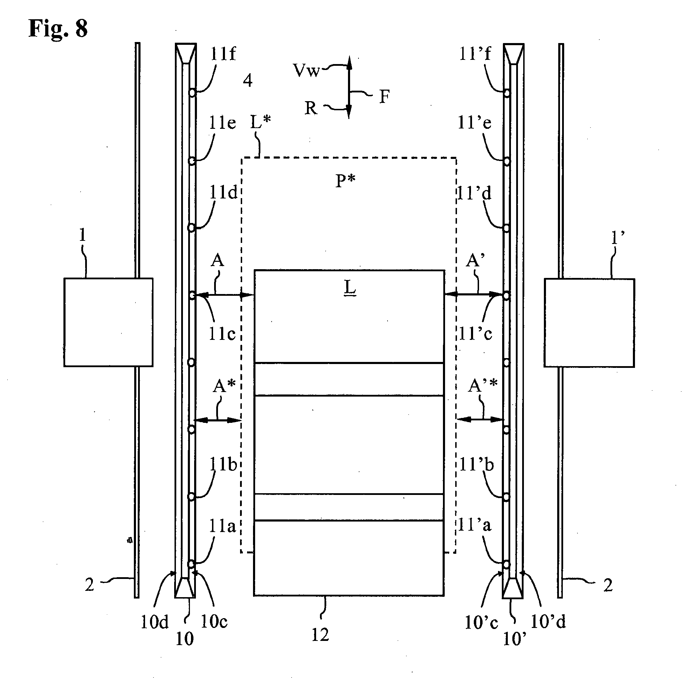

Die Funktionsweise der Abstandssensoren 11, 11' soll nun anhand Fig. 4, 5 und 8 erläutert werden. In den Radleitschienen 10, 10| sind eine Vielzahl von Abstandssensoren in gleichen Abständen voneinander angeordnet, wobei exemplarisch Abstandssensoren 11a-11e bzw. 11'a-11'e gekennzeichnet sind. Um optimale Abstände zu den Behandlungsaggregaten zu erhalten, sollte ein zu waschendes Fahrzeug 12 in der mittige Zielposition P* stehen, welche von den Radleitschienen 10, 10' seitlich durch Wunschabstände A*, A'* und nach vorne durch eine Wunschlängsposition L* definiert wird.

Während des Einfahrens des Fahrzeugs 12 in den Fahrbereich 4 in Vorwärtsrichtung Vw der Fahrrichtung F messen alle Abstandssensoren 11, 11' den Abstand der Fahrzeugräder des Fahrzeugs von der jeweiligen rechten bzw. linken Radleitschiene 10, 10'. Exemplarisch zeigt Fig. 10 den tatsächlichen Abstand A bzw. A' zwischen Fahrzeugreifen und Radleitschiene 10, 10' in Höhe des Abstandssensors 11c bzw. 11'c. Da nicht ohne größeren Aufwand ermittelt werden kann, ob die Abstandssensoren 11, 11' gerade den Abstand zum Reifen, Rad oder zur Fahrzeugseite messen, wird in einer Steuerung der Waschanlage die Differenz aus dem gemessenen Messabstand der Abstandssensoren 11 der linken Radleitschiene 10 und aus dem gemessenen Messabstand des jeweils gegenüberliegenden Abstandssensors 11' der rechten Radleitschiene 10' gebildet. Beispielsweise beträgt die Differenz von Abstandssensoren 11'c, 11c in Fig. 10 Null, da beide gleich groß sind. Solange die Differenz Null ist, der Messabstand beider Abstandssensoren 11, 11' also gleich groß ist, befindet sich das Fahrzeug in der gewünschten mittigen Position bezüglich der Radleitschienen 10, 10' innerhalb des Fahrbereichs 4. Weicht das Fahrzeug 12 jedoch nach rechts oder links von dieser mittigen Position ab, so verringert sich der Abstand zu einer der Radleitschienen 10 und der zur anderen Radleitschiene 10' vergrößert sich. Die Messabstände einander gegenüberliegender Abstandssensoren 11, 11' werden ungleich. Hierauf gibt die Steuerung an einer Anzeige der Waschanlage eine Richtungskorrekturanzeige aus, die dem Fahrer mitteilt, dass er zu weit auf einer Seite steht und gegenlenken muss, um das Fahrzeug in die andere Richtung und somit zu Mitte hin zu verfahren. Die Anzeige kann in Form von zwei Pfeilen gebildet sein, wobei der eine nach rechts und der andere nach links weist. Die Richtung, in welcher der Fahrer das Fahrzeug lenken soll, um wieder in die mittige Position zu gelangen, wird durch Beleuchtung des entsprechenden Pfeils angezeigt. Ist beispielsweise der Abstand A des linken Reifens zu linken Radleitschiene 10 geringer als der Abstand A' des rechten Reifens zur rechten Radleitschiene 10', befindet sich das Fahrzeug also zu weit links, so wird der rechte Pfeil aktiviert, und umgekehrt. Zudem wird bei korrekter, seitenmittiger Platzierung des Fahrzeugs eine Richtungsanzeige ausgegeben, z.B. einen geradeaus weisender Pfeil, welche dem Fahrer mitteilt, dass er mittig steht und nicht lenken muss. Um bei geringen, u.U. durch Messstörungen verursachten Abweichungen der zueinander gehörigen rechts- bzw. linksseitigen Messabstände voneinander ein ständiges Hin- und Herschalten zwischen den zugehörigen Richtungskorrekturanzeigen zu verhindern, welche den Fahrer nur verwirren würden, wird in diesem Fall die Ausgabe der entsprechenden Richtungskorrekturanzeige unterdrückt. Erst wenn der Unterschied zwischen rechtem und linkem Messabstand außerhalb des durch die Wunschabstände A*, A'* einstellbaren Toleranzbereichs gelangt, die Abstandsdifferenz sich also immer weiter vergrößert, wird die entsprechende Richtungskorrekturanzeige ausgegeben.

Gleichermaßen kann durch die Abstandssensoren 11, 11' der Radleitschienen 10, 10' die Längsposition L des Fahrzeugs 12 ermittelt werden, so dass eine gewünschte Längsposition L* erreicht werden kann. In Fig. 10 ist die gewünschte Längsposition L* erreicht, wenn die Fahrzeugfront in Höhe der Abstandssensoren 11e, 11'e gelangt. Solange die Abstandssensoren 11e, 11'e keinen Abstand messen, also kein Fahrzeug detektieren, wird dem Fahrer durch ein Weiterfahrsignal angezeigt, dass er also noch weiter in Vorwärtsrichtung Vw fahren soll, z.B. durch eine grüne Ampel. Sobald die Abstandssensoren 11e, 11' jeweils eine Abstand messen, die Fahrzeugfront also die Abstandssensoren 11e, 11'e erreicht, wird dem Fahrer durch ein Stoppsignal angezeigt, dass er stehen bleiben soll, beispielsweise durch eine rote Ampel. Überfährt das Fahrzeug die gewünschte Längsposition L*, was vorteilhaft durch die Abstandssensoren 11f, 11'f detektiert wird, so wird dem Fahrer durch ein Rückfahrsignal angezeigt, dass er rückwärts fahren soll, bis das Fahrzeug die Abstandssensoren 11f, 11'f und 11e, 11'e freigibt.

Somit kann man während des Einfahrens sowohl Rückmeldung über die seitliche Position des Fahrzeugs als auch über seine Längsposition L erhalten. In einer vorteilhaften Ausführung der Erfindung wird aus den Messabständen eine Fahrzeugposition im Fahrbereich 4 bestimmt, welche relativ zu der Wunschposition P* des Fahrzeugs 12 angezeigt wird. Beispielsweise kann für die Wunschposition P* das in Fig. 10 gestrichelt angedeutete Rechteck in einem Display angezeigt werden, auf dem gleichzeitig die aktuell gemessene Position des Fahrzeugs 12 kontinuierlich angezeigt wird. Der Fahrer sieht somit, wie das Fahrzeug zu der Wunschposition P* steht und in welche Richtung er lenken bzw. fahren muss, um das Fahrzeug in die Wunschposition P* zu bekommen. Sobald das Fahrzeug 12 in der Wunschposition P* ist, kann am Display eine entsprechende Anzeige angezeigt werden, beispielsweise ein Blinken von angezeigter Wunschposition P* und Fahrzeugposition. Eine alternative und vorteilhafte Anzeige wäre es, die angezeigte Fahrzeugposition bis zum Erreichen der Wunschposition P* rot anzuzeigen, und dann die angezeigte Fahrzeugposition grün anzuzeigen.

Hierdurch wird vorteilhaft ein Verfahren zum mittigen Positionieren eines Fahrzeugs in einem Fahrbereich einer erfindungsgemäßen Fahrzeugwaschanlage ermöglicht, das gekennzeichnet ist durch die folgenden Schritte: a) beidseitiges Messen des Abstandes zwischen Radleitschienen und Rädern und/oder Fahrzeugseiten des Fahrzeugs während des Einfahrens des Fahrzeugs in den Fahrbereich, b) Vergleichen des von der linken Radleitschiene gemessenen linken Messabstands mit dem von der rechten Radleitschiene gemessenen rechten Messabstand, c) Ausgeben einer ersten Richtungskorrekturanzeige, wenn der gemessene rechte Messabstand größer als der linke Messabstand ist, oder d) Ausgeben einer zweiten Richtungskorrekturanzeige, wenn der linke Messabstand größer als der rechte Messabstand ist. Bei einem Unterschied zwischen rechtem und linkem Messabstand, die kleiner als ein vorgegebener Toleranzbereich ist, kann in Schritt c) oder Schritt d) vorteilhafterweise keine Richtungskorrekturanzeige und/oder eine Richtungsanzeige ausgegeben werden. Hierdurch wird der Fahrer nicht durch häufig wechselnde Richtungskorrekturanzeigen verwirrt bzw. angezeigt, dass das Fahrzeug mittig im Fahrbereich steht und er nicht gegensteuern muss.

Die Abstände zwischen den Radleitschienen und Rädern und/oder Fahrzeugseiten werden vorteilhaft durch die Abstandssensoren in den Radleitschienen gemessen. In einer vorteilhaften Fortbildung des Verfahrens wird aus den gemessenen Messabständen eine Längsposition des Fahrzeugs ermittelt. Insbesondere wenn mehrere Abstandssensoren über die Länge der Radleitschienen verteilt sind, kann detektiert werden, ob ein Fahrzeug den bereits am Abstandssensor vorbeigefahren ist oder nicht. Hierdurch erhält man zusätzlich zum seitlichen Abstand des Fahrzeugs auch Informationen zu seiner Längsposition in der Waschanlage. Vorteilhaft kann diese Information dazu verwendet werden, ein Weiterfahrsignal auszugeben, wenn das Fahrzeug eine vorgegebene Längsposition noch nicht erreicht hat, und/oder ein Stoppsignal auszugeben, wenn das Fahrzeug die vorgegebene Längsposition erreicht hat, und/oder ein Rückfahrsignal auszugeben, wenn das Fahrzeug die vorgegebene Längsposition überfahren hat. Somit kann das Fahrzeug in eine Wunschposition bezüglich der Waschanlage und der Behandlungsaggregate gebracht werden, ohne zusätzlichen Messaufwand betreiben zu müssen.

Durch die Anordnung mehrerer Abstandssensoren entlang der Länge der Radleitschiene kann man vorteilhaft zusätzlich Informationen zur Längsposition des Fahrzeugs relativ zur Maschine, beispielsweise dem Waschportal, beim Einfahren erhalten. Diese Information kann entsprechend für den Fahrer visualisiert werden. Somit kann man während des Einfahrens sowohl Rückmeldung über die seitliche Position des Fahrzeugs als auch über die Längsposition erhalten. Über eine geeignete Visualisierung könnte das Fahrzeug beispielsweise in einem Zielrechteck abgestellt werden. Steht das Fahrzeug komplett innerhalb des Rechtecks, ist es in Längs und Querachse richtig positioniert. Steht das Fahrzeug teilweise außerhalb des Rechtecks, ist es falsch positioniert in Längs bzw. Querachse.

## Patentansprüche

1. Fahrzeugwaschanlage mit längs einer Fahrrichtung (F) für ein zu behandelndes Fahrzeug verfahrbaren Behandlungseinrichtungen (1, 1', 3, 3'), mit einem Paar an einem Waschanlagenboden (B) zwischen den Behandlungseinrichtungen (1, 1', 3, 3') in Fahrrichtung (F) verlaufenden und quer zur Fahrrichtung (F) voneinander beabstandet angeordneten Radleitschienen (9; 10, 10'), welche einen Fahrbereich (4) für das Fahrzeug seitlich begrenzen, wobei der Abstand der Radleitschienen (10, 10') voneinander quer zur Fahrrichtung größer als ein vorgegebener maximaler Radabstand ist, **dadurch gekennzeichnet, dass** die Radleitschienen (9; 10, 10') jeweils eine im eingebauten Zustand vom Waschanlagenboden (B) nach oben weisende und entlang der Fahrrichtung (F) des zu behandelnden Fahrzeugs verlaufende, vom Fahrbereich (4) weg weisende Maschinenflanke (9d; 10d, 10d') aufweisen, wobei die Maschinenflanke (9d; 10d, 10d') so ausgebildet ist, dass sie nach oben zum Fahrbereich (4) hin geneigt ist, wobei ein zum Fahrbereich (4) hin geneigter, zwischen der Maschinenflanke (9d; 10d, 10d') und dem Waschanlagenboden (B) gebildeter Neigungswinkel (β) zwischen 25° und 65° beträgt.

2. Fahrzeugwaschanlage nach Anspruch 1, **dadurch gekennzeichnet, dass** eine Radleitflanke (9c; 10c, 10c') auf einer der Maschinenflanke (9d; 10d, 10d') entgegengesetzten Seite der Radleitschiene (9; 10) vorgesehen ist, wobei die Radleitflanke (9c; 10c, 10c') so ausgebildet ist, dass sie im eingebauten Zustand der Radleitschiene (9; 10) nach oben vom Fahrbereich (4) weg geneigt ist.

3. Fahrzeugwaschanlage nach Anspruch 2, **dadurch gekennzeichnet, dass** ein zwischen der Radleitflanke (9c; 10c, 10c') und einer senkrecht auf dem Waschanlagenboden (B) und parallel zur Fahrrichtung (F) verlaufenden Vertikalen (V) gebildeter, vom Fahrbereich (4) weg geneigter weiterer Neigungswinkel (α) zwischen 5° und 30° beträgt.

4. Fahrzeugwaschanlage nach einem der voranstehenden Ansprüche, **dadurch gekennzeichnet, dass** die Radleitschiene (9; 10) aus einem länglichen Hohlprofilmaterial gebildet ist.

5. Fahrzeugwaschanlage nach einem der voranstehenden Ansprüche, **dadurch gekennzeichnet, dass** auf der Radleitflanke (10c) eine Abdeckung (12) aus Kunststoff oder Gummi angeordnet ist.

6. Fahrzeugwaschanlage nach Anspruch 5, **dadurch gekennzeichnet, dass** die Abdeckung von der Radleitflanke (10c) weiter über eine sich an das obere Ende der Radleitflanke anschließenden Stirnseite (10b) verläuft.

7. Fahrzeugwaschanlage nach einem der voranstehenden Ansprüche, **dadurch gekennzeichnet, dass** die Radleitschiene aus einem Vollmaterial aus Kunststoff oder Hartgummi gebildet ist.

8. Fahrzeugwaschanlage nach einem der voranstehenden Ansprüche, **dadurch gekennzeichnet, dass** in der Radleitschiene (10) mindestens ein Abstandssensor (11) zum Messen des Abstands von Radleitschiene (10) zu einer Radaußenseite und/oder einer Fahrzeugseite vorgesehen ist.

9. Fahrzeugwaschanlage nach Anspruch 8, **dadurch gekennzeichnet, dass** die Radleitflanke (10c) eine oder mehrere voneinander beabstandete Messöffnungen (10) zur Aufnahme des oder der Abstandssensoren (11) aufweist.

10. Fahrzeugwaschanlage nach einem der voranstehenden Ansprüche, **dadurch gekennzeichnet, dass** die Maschinenflanke (9d; 10d, 10d') auf einer dem Fahrbereich (4) abgewandten Seite der Radleitschiene (9; 10) angeordnet ist.

11. Fahrzeugwaschanlage nach einem der voranstehenden Ansprüche, **dadurch gekennzeichnet, dass** die Radleitflanken (10c, 10c') der Radleitschienen (10, 10') zum Fahrbereich (4) hin weisen.

## Claims

1. Car wash system with treatment devices (1, 1', 3, 3') that can move along a travel direction (F) for a vehicle to be treated, with a pair of wheel guide rails (9; 10, 10') running on a washing system floor (B) between the treatment devices (1, 1', 3, 3') in the travel direction (F) and arranged spaced apart from one another transverse to the travel direction (f), which wheel guide rails laterally delimit a travel region (4) for the vehicle, the spacing of the wheel guide rails (10, 10') from one another transverse to the travel direction being greater than a predetermined maximum wheel spacing, **characterised in that** the wheel guide rails (9; 10, 10') in each case have a machine flank (9d; 10d, 10d') pointing away from the travel region (4), running along the travel direction (F) of the vehicle to be treated and pointing upwardly in the installed state of the washing system floor (B), wherein the machine flank (9d; 10d, 10d') is configured in such a way that it is upwardly inclined toward the travel region (4), an inclination angle (β) inclined toward the travel region (4) and formed between the machine flank (9d; 10d, 10d') and the washing system floor (B) being between 25° and 65°.

2. Car wash system according to claim 1, **characterised in that** a wheel guide flank (9c; 10c, 10c') is provided on a side of the wheel guide rail (9; 10) opposite the machine flank (9d; 10d, 10d'), the wheel guide flank (10c; 10c, 10c') being configured in such a way that it is inclined upwardly away from the travel region (4) in the installed state of the wheel guide rail (9; 10).

3. Car wash system according to claim 2, **characterised in that** a further inclination angle (α), which is inclined away from the travel region (4) and formed between the wheel flank (9c; 10c, 10c') and a vertical (V) running perpendicularly to the washing system floor (B) and parallel to the travel direction (F) is between 5° and 30°.

4. Car wash system according to any one of the preceding claims, **characterised in that** the wheel guide rail (9; 10) is formed from an elongate hollow profile material.

5. Car wash system according to any one of the preceding claims, **characterised in that** a cover (12) made of plastics material or rubber is arranged on the wheel guide flank (10c).

6. Car wash system according to claim 5, **characterised in that** the cover runs from the wheel guide flank (10c) further over an end face (10b) adjoining the upper end of the wheel guide flank.

7. Car wash system according to any one of the preceding claims, **characterised in that** the wheel guide rail is formed from a solid material made of plastics material or hard rubber.

8. Car wash system according to any one of the preceding claims, **characterised in that** at least one distance sensor (11) to measure the distance from the wheel guide rail (10) to the outside of a wheel and/or the side of a vehicle is provided in the wheel guide rail (10).

9. Car wash system according to claim 8, **characterised in that** the wheel guide flank (10c) has one or more measurement openings (10), which are spaced apart from one another, to receive the distance sensor(s) (11).

10. Car wash system according to any one of the preceding claims, **characterised in that** the machine flank (9d; 10d, 10d') is arranged on a side of the wheel guide rail (9; 10) remote from the travel region (4).

11. Car wash system according to any one of the preceding claims, **characterised in that** the wheel guide flanks (10c, 10c') of the wheel guide rails (10, 10') point toward the travel region (4).

## Revendications

1. Station de lavage de véhicules avec des dispositifs de traitement (1, 1', 3, 3') mobiles le long d'un sens de roulement (F) pour un véhicule à traiter avec une paire de rails de guidage de roues (9 ; 10, 10') s'étendant sur un sol de station de lavage (B) entre les dispositifs de traitement (1, 1', 3, 3') dans le sens de la marche (F) et disposés à distance les uns des autres, transversalement par rapport au sens de la marche (F), lesquels rails délimitent latéralement une zone de roulement (4) pour le véhicule, la distance entre les rails de guidage de roues (10, 10'), transversalement par rapport au sens de la marche, étant supérieure à une distance maximale prescrite entre les roues, **caractérisée en ce que** les rails de guidage de roues (9 ; 10, 10') présentent chacun un flanc de machine (9d ; 10d, 10d') détourné de la zone de roulement (4), s'étendant le long du sens de roulement (F) du véhicule à traiter, et tourné vers le haut dans l'état intégré du sol de station de lavage (B), le flanc de machine (9d ; 10d, 10d') étant réalisé de manière à être incliné vers le haut, vers la zone de roulement (4), l'angle d'inclinaison (β) incliné vers la zone de roulement (4), formé entre le flanc de machine (9d ; 10d, 10d') et le sol de station de lavage (B), étant compris entre 25° et 65°.

2. Station de lavage de véhicules selon la revendication 1, **caractérisée en ce qu'**un flanc de guidage de roues (9c ; 10c, 10c') est prévu sur un côté opposé au flanc de machine (9d ; 10d, 10d') du rail de guidage de roue (9 ; 10), le flanc de guidage de roues (9c ; 10c, 10c') étant réalisé de manière à être incliné vers le haut depuis la zone de roulement (4) dans l'état intégré du rail de guidage de roue (9 ; 10).

3. Station de lavage de véhicules selon la revendication 2, **caractérisée en ce que** l'autre angle d'inclinaison (α) incliné depuis la zone de roulement (4), formé entre le flanc de guidage de roues (9c ; 10c, 10c') et une verticale (V) s'étendant perpendiculairement sur le sol de station de lavage (B) et parallèlement au sens de la marche (F), est compris entre 5° et 30°.

4. Station de lavage de véhicules selon l'une quelconque des revendications précédentes, **caractérisée en ce que** le rail de guidage de roue (9 ; 10) est constitué d'un matériau au profilé creux oblong.

5. Station de lavage de véhicules selon l'une quelconque des revendications précédentes, **caractérisée en ce qu'**un recouvrement (12) en matière plastique ou caoutchouc est disposé sur le flanc de guidage de roues (10c).

6. Station de lavage de véhicules selon la revendication 5, **caractérisée en ce que** le recouvrement du flanc de guidage de roue (10c) s'étend davantage sur un côté frontal (10b), contigu à l'extrémité supérieure du flanc de guidage de roues.

7. Station de lavage de véhicules selon l'une quelconque des revendications précédentes, **caractérisée en ce que** le rail de guidage de roue est constitué d'un matériau plein en matière plastique ou caoutchouc dur.

8. Station de lavage de véhicules selon l'une quelconque des revendications précédentes, **caractérisée en ce que**, dans le rail de guidage de roue (10), au moins un capteur de distance (11) est prévu pour la mesure de la distance entre le rail de guidage de roue (10) et un côté extérieur de roue et/ou un côté de véhicule.

9. Station de lavage de véhicules selon la revendication 8, **caractérisée en ce que** le flanc de guidage de roue (10c) présente une ou plusieurs ouvertures de mesure (10), espacées les unes des autres, pour la réception du ou des capteurs de distance (11).

10. Station de lavage de véhicules selon l'une quelconque des revendications précédentes, **caractérisée en ce que** le flanc de machine (9d ; 10d, 10') est disposé sur un côté, éloigné de la zone de roulement (4), du rail de guidage de roue (9 ; 10).

11. Station de lavage de véhicules selon l'une quelconque des revendications précédentes, **caractérisée en ce que** les flancs de guidage de roue (10c, 10c') des rails de guidage de roue (10, 10') sont dirigés vers la zone de roulement.
